Europäisches Patentamt

European Patent Office

Office européen des brevets

(19)

(11) Veröffentlichungsnummer : **0 015 993**
**B1**

(12)

# EUROPÄISCHE PATENTSCHRIFT

(45) Veröffentlichungstag der Patentschrift :
03.02.82

(21) Anmeldenummer : 79900520.2

(22) Anmeldetag : 22.05.79

(86) Internationale Anmeldenummer :
PCT/DE 79/00051

(87) Internationale Veröffentlichungsnummer :
WO WO/79011 (13.12.79 Gazettee 79/25)

(51) Int. Cl.³ : **F 16 D 65/12**, F 16 D 65/84

(54) Bremsscheibe für Scheibenbremsen, insbesondere Fahrzeugbremsen.

(30) Priorität : 23.05.78 DE 2822379

(43) Veröffentlichungstag der Anmeldung :
01.10.80 (Patentblatt 80/20)

(45) Bekanntmachung des Hinweises auf die Patenterteilung : 03.02.82 Patentblatt 82/05

(84) Benannte Vertragsstaaten :
CH FR GB LU SE

(56) Entgegenhaltungen :
DE - A - 1 425 296
DE - A - 1 575 826
US - A - 3 623 579

(73) Patentinhaber : SELZER FERTIGUNGSTECHNIK
GMBH & CO.
D-6349 Driedorf 2
Roth (DE)

(72) Erfinder : DIEDERICHS, Herbert
D-6348 Herborn
Alsbachstrasse 42 (DE)

(74) Vertreter : Schlee, Richard, Dipl.-Ing. et al
Patentanwälte Dipl.-Ing. R. Schlee Dipl.-Ing. A. Missling Bismarckstrasse 43
D-6300 Lahn-Giessen 1 (DE)

EP 0 015 993 B1

Imprimerie Jouve, 18, rue St-Denis, 75001 Paris, France

## Bremsscheibe für Scheibenbremsen, insbesondere Fahrzeugbremsen

Beschreibung

Die Erfindung bezieht sich auf eine mehrteilige Bremsscheibe für Scheibenbremsen, insbesondere Fahrzeugbremsen, mit einem Tragkörper, der einen Verbindungsflansch bildet und mit an Seitenflächen des Tragkörpers anliegenden Reibringen aus Metall, insbesondere aus Stahl, die mit dem Tragkörper durch Niete verbunden sind, die den Tragkörper und mindestens einen Reibring durchgreifen.

Scheibenbremsen haben eine Bremsscheibe, die drehfest mit dem abzubremsenden drehbaren Teil, z.B. einem Fahrzeugrad, verbunden sind. Mit den Reibringen der Bremsscheibe wirken Bremsklötze zusammen, an denen sich Bremsbeläge befinden. Die Bremsklötze befinden sich an einem die Scheibe zangenartig umfassenden Halter, so daß die Bremsklötze einander gegenüberliegend an der Bremsscheibe anliegen. Die Hauptverschleißteile an Scheibenbremsen sind die Bremsbeläge. Jedoch haben auch die Reibscheiben keine unbegrenzte Lebensdauer. Sie können z.B. wegen Riefenbildung unbrauchbar werden. Riefen können z.B. entstehen, wenn irgendwelche harten Körner zwischen Bremsbeläge und Reibscheiben geraten oder wenn die Bremsbeläge nicht rechtzeitig erneuert werden. Es ist deshalb erwünscht, auch die Reibscheiben leicht auswechseln zu können.

Bekannt sind gegossene Bremsscheiben, an denen sich auch die Reibflächen befinden (siehe z.B. DE-AS 19 50 178).

Gegossene Bremsscheiben müssen spanabhebend bearbeitet werden, um den erforderlichen Rundlauf zu erhalten und um genau ebene Bremsflächen und Befestigungsflächen zu bilden. Für die meisten Anwendungsfälle, so insbesondere auch bei Fahrzeugbremsen, müssen gegossene Bremscheiben ausgewuchtet werden, was zusätzliche Arbeitsgänge erfordert.

Bekannt ist auch eine aus mehreren Teilen zusammengesetzte Bremsscheibe der eingangs genannten Art (DE-AS 16 25 827). Bei dieser bekannten Bremsscheibe ist der Tragkörper etwa sternförmig ausgebildet, während die Reibscheiben nach innen vorspringende Lappen aufweisen, die im Bereich der Vorsprünge des Tragkörpers an diesem anliegen. Die Niete haben einen mittleren Teil in Form eines Gleitsteines, der in rechteckigen Ausnehmungen des Tragkörpers radial beweglich ist. Zwischen den Reibscheiben liegt ein sogenanntes Kanalblech. Durch die Gleitmöglichkeit zwischen Tragkörper und Reibscheiben soll vermieden werden, daß Wärmedehnungen der Reibringe infolge von Reibungswärme Spannungen im Tragkörper erzeugen.

Die Herstellung einer solchen Bremsscheibe ist problematisch. Eine genügend genaue Zentrierung der Reibscheiben am Tragkörper läßt sich kaum erreichen. Jedenfalls ist hierzu eine genaue Bearbeitung der Ausnehmungen am Tragkörper und der Gleitsteine an den Nieten erforderlich, was erhebliche Herstellungskosten verursacht. Der Zusammenhalt der Reibscheiben und des Kanalbleches wird alleine durch eine inneren Ring aus wenigen Nieten bewirkt, was zur Folge haben kann, daß sich die wenigen Niete lockern, insbesondere unter dem Einfluß von Schwingungen der Bremsscheibe.

Der Erfindung liegt die Aufgabe zugrunde, eine Bremsscheibe der eingangs genannten Art so auszubilden, daß sie billig herstellbar ist, wobei ein fester zusammenhalt aller ihrer Teile gewährleistet sein soll und die Reibringe im Bedarfsfall ausgewechselt werden können, ohne daß eine erneute Zentrierung der gesamten Breisscheibe erforderlich ist.

Diese Aufgabe wird nach der Erfindung dadurch gelöst, daß der Tragkörper und die Reibringe Feinstanzteile sind, daß der Tragkörper und/oder die Reibringe zusätzliche über ihren Umfang verteilte durchgehende Fixierungslöcher aufweisen und daß aus den Reibscheiben und/oder dem Tragkörper Fixierungsvorsprünge durch Herausdrücken von Material von der gegenüberliegenden Seite her ausgeprägt sind, die passend in die Fixierungslöcher eingreifen und die Reibscheiben am Tragkörper zentrieren.

Feinstanzteile lassen sich so genau herstellen, daß eine Nachbearbeitung nicht erforderlich ist. Das Feinstanzen unterscheidet sich vom normalen Stanzen bekanntlich dadurch, daß das Stanzwerkzeug sogenannte Ringzacken aufweist, die den Bereich des Stanzschnittes umgeben und das Material so fest einspannen, daß es nicht in Vertiefungen der Matrize des Stanzwerkzeuges hineingezogen werden kann. Man erhält dadurch Schnittflächen, die über die gesamte Materialdicke glatt sind, während ja beim Normalstenzen nur etwa ein Drittel der Materialdicke eine eigentliche Schnittfläche ist, während der Rest eine Bruchfläche darstellt. Durch Feinstanzen können sehr genau maßhaltige Teile hergestellt werden. Man kann auch zur Bildung der Vorsprünge Material von einer Seite zur anderen Seiten durchdrücken, ohne ein durchgehendes Loch zu bilden. Man erhält dann Vorsprünge, die über ihre gesamte Länge einen gleichbleibenden Querschnitt haben, während an der gegenüberliegenden Seite entsprechende Vertiefungen entstehen.

Durch das Eingreifen der auf diese Weise genau hergestellten Vorsprünge in genau hergestellte Vertiefungen erhält man eine sehr genaue Ausrichtung der Reibringe am Tragkörper und dadurch eine genaue Zentrierung, so daß ein nachträgliches Auswuchten nicht erforderlich ist. Wenn Reibringe ersetzt werden müssen, erhält man dank der Fixierungsvorsprünge und der Fixierungslöcher wieder eine genaue Zentrierung der Reibscheiben relativ zum Tragkörper. Ein Auswuchten ist auch nach einem solchen Auswechseln nicht erforderlich. Die Scheibe insgesamt hat einen festen Verbund, da der Zusammenhalt einmal durch das Eingreifen der Vorsprünge in die Vertiefungen und zum anderen durch die Niete hergestellt wird. Zwar können die Vorsprünge einen Zusammenhalt in axialer Richtung nicht bewirken (dies ist Aufgabe der Niete), jedoch können die Fixierungseinrichtungen wirksam eine gegenseitige Verdrehung verhindern, wodurch eine Scherbeanspruchung der Niete weitgehend vermieden wird.

Mit der erfindungsgemäßen Ausrichtung der Bremsscheibenteile aufeinander kann noch der Nebeneffekt erzielt werden, daß an den Bremsflächen Vertiefungen vorhanden sind. Wenn die Fixierungsvorsprünge nach innen ragen und in den Tragkörper eingreifen, ergeben sich die Vertiefungen daraus, daß Material nach innen durchgedrückt wurde. Wenn Fixierungsbohrungen in den Reibringen angeordnet sind, erhält man Vertiefungen, wenn man die Fixierungsvorsprünge gemäß Anspruch 2 kürzer ausbildet als die Länge der Fixierungslöcher.

In den Ansprüchen 3 bis 7 ist eine Ausführungsform einer Bremsscheibe mit Luftkanälen angegeben. Dadurch erhält man eine Innenbelüftung der Bremsscheibe und eine wesentlich bessere Abführung von Reibungswärme. Auch in diesem Fall läßt sich der Tragkörper vorteilhaft als Feinstanzteil herstellen, wobei die Kanäle wiederum durch Hindurchdrücken von Material gebildet werden. Hierdurch erhält man gleichzeitig den Effekt, daß der Anlagebereich gut in eine Ebene ausgerichtet wird, weil das Hindurchdrücken des Materials einen Richteffekt erzeugt.

Der Tragkörper kann sowohl scheibenförmig (Anspruch 8) als auch topfförmig ausgebildet sein (Anspruch 9). Beide Ausführungsformen sind an sich bekannt. Auch ein topfförmiger Tragkörper läßt sich als Feinstanzteil ausbilden, wobei zur Bildung des Topfes eine Ziehoperation stattfindet.

Die Ausführungsform nach Anspruch 10 ist besonders vorteilhaft für eine Bremsscheibe ohne Lüftungskanäle. Man kann jedoch auch bei einer Bremsscheibe ohne Lüftungskanäle die Vorsprünge am Tragkörper anbringen oder aber auch sowohl am Tragkörper als auch an den Reibscheiben. Wesentlich ist nur, daß jedem Vorsprung ein Fixierungsloch zugeordnet ist. Bei Bremsscheiben mit Lüftungskanälen ist die Anordnung gemäß Anspruch 12 von Vorteil. Aber auch bei einer solchen Scheibe können die Fixiereinrichtungen umgekehrt werden, d.h. es können die Fixierungslöcher am Tragkörper und die Fixierungsvorsprünge an den Reibscheiben angeordnet werden.

Bei einer Verteilung der Fixierungseinrichtungen auch in radialer Einrichtung gewinnt man eine günstige Verteilung von Vertiefungen an den Bremsflächen über die gesamte Bremsflächen. Diese Vertiefungen dienen der möglichst raschen Beseitigung eines Flüssigkeitsfilmes, da die Flüssigkeit zum Teil in den Löchern aufgenommen wird.

In der Zeichnung sind Ausführungsbeispiele der Erfindung dargestellt. Es zeigen :

Fig. 1 eine Ansicht einer Bremsscheibe ohne Lüftungskanäle mit einem ebenen Tragkörper,

Fig. 2 einen Schnitt nach Linie II-II in Fig. 1,

Fig. 3 eine Ansicht einer Bremsscheibe mit topfförmigem Tragkörper, wieder ohne Lüftungskanäle,

Fig. 4 einen Schnitt nach Linie IV-IV in Fig. 3,

Fig. 5 eine Seitenansicht einer Bremsscheibe mit Lüftungskanälen,

Fig. 6 einen Schnitt nach Linie VI-VI in Fig. 5 und

Fig. 7 einen Schnitt durch einen topfförmigen Tragkörper, der wahlweise anstelle des in Fig. 6 gezeigten Tragkörpers verwendet werden kann.

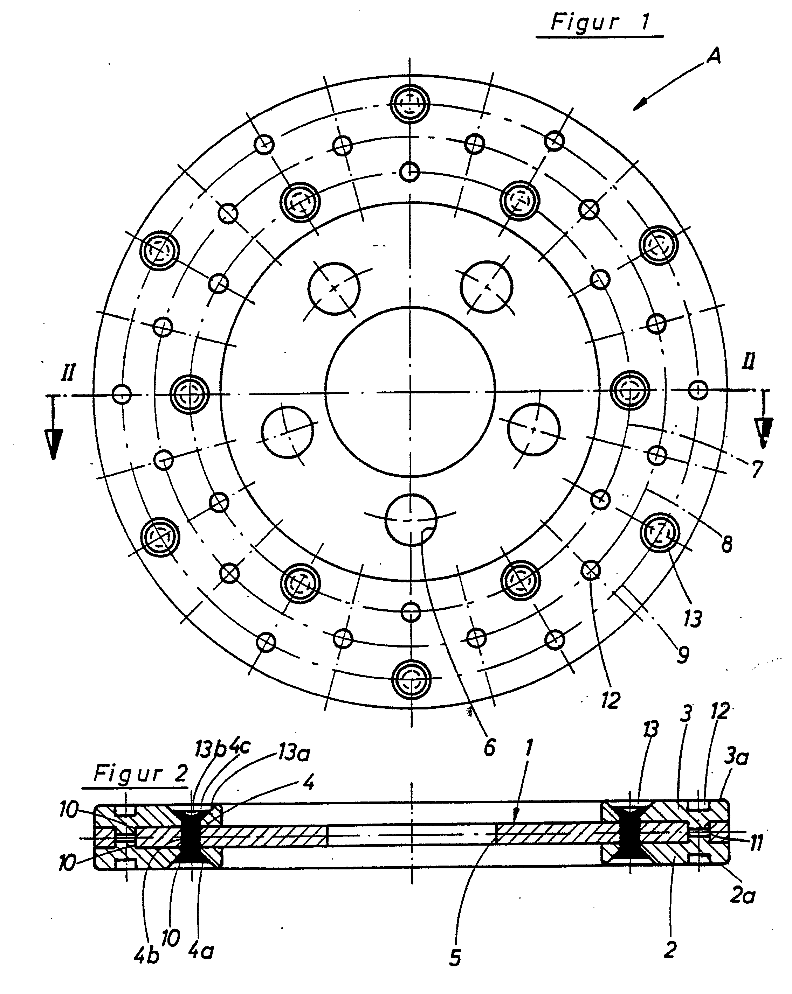

Die Bremsscheibe nach den Fig. 1 und 2 ist insgesamt mit A bezeichnet. Die Bremsscheibe hat einen Tragkörper 1, sowie zwei gleiche Reibscheiben 2 und 3. Diese Teile sind durch Niete 4 zusammengehalten. Sowohl der Tragkörper 1 als auch die Reibscheiben 2 und 3 sind Feinstanzteile, die nach dem Stanzen nicht mehr bearbeitet wurden.

Der Tragkörper 1 ist eine ebene Scheibe mit einem zentralen kreisrunden Durchbruch 5, der von einem Kranz aus insgesamt fünf Durchgangslöchern 6 umgeben ist. Auf drei Teilkreisen 7, 8 und 9 sind als Fixierungslöcher dienende Durchgangslöcher 10 angeordnet. Ein Teil der auf den Teilkreisen 7 und 9 liegenden Durchgangslöcher dient für den Durchgriff der Niete 4.

Die Reibscheiben 2 und 3 sind mit Fixierungsvorsprüngen 11 versehen, die gleich angeordnet sind, wie die Fixierungslöcher 10. Die Vorsprünge sind durch Herausdrücken von Material von den Außenseiten 2a bzw. 3a der Reibscheiben 2 und 3 gebildet. Hierdurch entstehen an den Bremsflächen 2a und 3a Vertiefungen 12, die das gleiche Volumen wie die Vorsprünge 11 haben.

Wie man aus Fig. 1 ersehen kann, sind auf dem mittleren Teilkreis 8 nur Fixierungsvorsprünge 11 (und demgemäß entsprechende Vertiefungen 12) angeordnet, während die Fixierungsvorsprünge auf den Teilkreisen 7 und 9 mit Löchern 13 für die Niete 4 abwechseln. Die Löcher 13 haben einen kegeligen Bereich 13a für die Aufnahme eines Nietkopfes und einen kurzen zylindrischen Bereich 13b für den Durchgriff des Nietschaftes.

Bei der Montage der Bremsscheibe werden, wie gesagt, direkt Feinstanzteile, die ohne weitere Nachbearbeitung sind, verwendet. Bei der Montage werden die Fixierungsvorsprünge 11 in die Fixierungslöcher 10 eingeführt, wodurch man eine sehr genaue Zentrierung und auch eine gute Verdrehsicherung zwischen den Reibringen und dem Tragkörper erhält. Danach werden die Teile 1, 2 und 3 durch die Niete 4 aneinander fixiert. Der Nietkopf 4a ist bereits vor dem Einstecken der Niete an den Nietschaft 4b angeformt. Nach dem Durchstecken wird der Nietkopf 4c geformt. Die Nietköpfe sind relativ zum Volumen der Ansenkungen 13a so gewählt, daß in den Ansenkungen noch ein gewisser Raum frei bleibt.

An den Bremsflächen 2a und 3a befinden sich viele Vertiefungen, nämlich die Vertiefungen 12 und die Vertiefungen, die oberhalb der Niete noch frei bleiben. Diese Vertiefungen sind erwünscht, da ein eventueller Wasserfilm von den Bremsklötzen sehr schnell weggedrückt werden kann. Wenn Reibringe 2 und 3 ausgewechselt werden müssen, werden die Niete 4 entfernt. Neue Reibscheiben werden gleich montiert, wie die ursprünglichen Reibscheiben. Auch hierbei sind besondere Maßnahmen zu ihrer Zentrierung nicht erforderlich, da durch den Eingriff der Fixierungsvorsprünge 11 in die Fixierungslöcher 10 eine ausgezeichnete Zentrierung erreicht wird. Ersatzreibscheiben werden wieder mittels Nieten 4 befestigt.

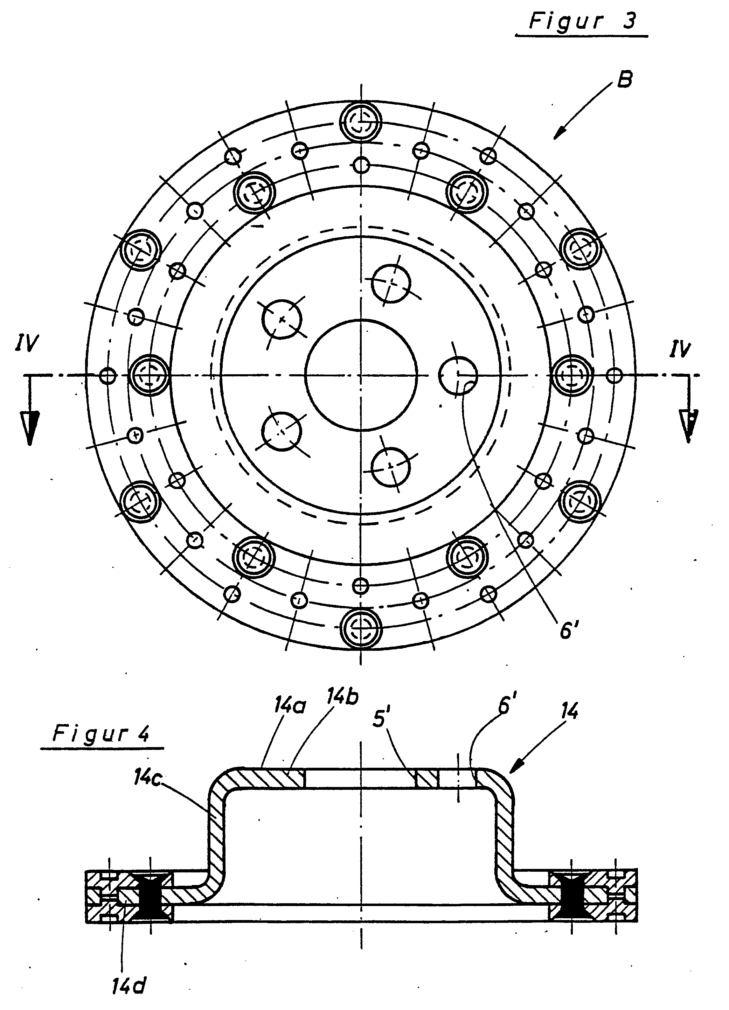

Die Ausführungsform nach den Fig. 3 und 4 unterscheidet sich von der beschriebenen Ausführungsform im Prinzip nur dadurch, daß der hier insgesamt mit 14 bezeichnete Tragkörper topfförmig ausgebildet ist. Det topfförmige Tragkörper 14 hat eine Befestigungsfläche 14a, in der sich wieder ein Kranz aus Bohrungen 6' sowie eine zentrale Zentrierbohrung 5' befinden. Der die Befestigungsfläche 14a bildende Topfboden 14b geht in eine zylindrische Wand 14c über. Die zylindrische Wand 14c geht in einen scheibenförmigen Teil 14d über, der in gleicher Art und Weise gelocht ist, wie der Tragkörper 1 nach den Fig. 1 und 2.

Auch der topfförmige Tragkörper 14 ist ein Feinstanzteil. Die topfförmige Vertiefung wird durch eine Ziehoperation hergestellt.

Zur Unterscheidung gegenüber der Ausführungsform A ist die Bremsscheibe nach den Fig. 3 und 4 insgesamt mit B bezeichnet.

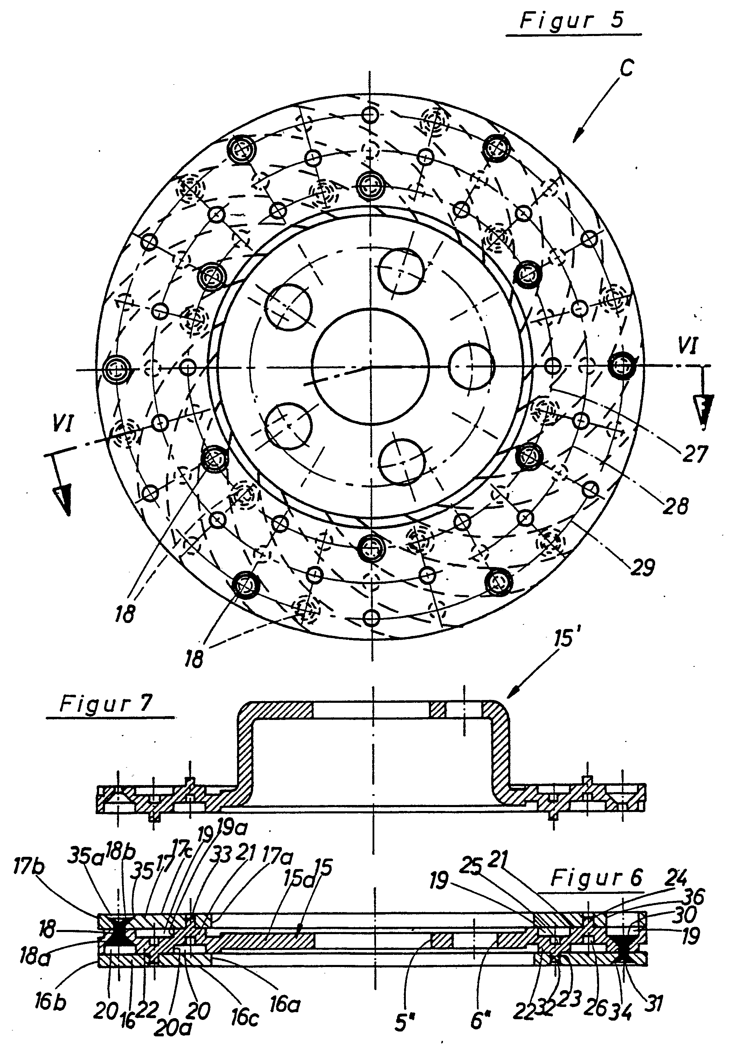

Die in den Fig. 5 und 6 dargestellte, insgesamt mit C bezeichnete Bremsscheibe ist eine Bremsscheibe mit Innenbelüftung. Sie hat einen Tragkörper 15 und zwei Reibringe 16 und 17. Diese Teile sind durch Niete 18 miteinander verbunden.

Der Tragkörper 15 hat ebenfalls eine zentrale Zentrierbohrung 5'', die von einem Kranz aus Befestigungslöchern 6'' umgeben ist. An der in Fig. 6 oben befindlichen Seite des Tragkörpers 15 befinden sich Kanäle 19 und an der unten liegenden Seite Kanäle 20. Die Kanäle sind gekrümmt, wie man aus den gestrichelten Linien in Fig. 5 erkennen kann. Sie münden sowohl im Bereich der inneren Ränder 16a, 17a als auch im Bereich der äußeren Ränder 16 b und 17b der Reibringe 16 und 17 ins Freie. Die Kanäle können deshalb radial von innen nach außen von Luft durchströmt werden. Das Kanalsystem wirkt ähnlich wie die Kanäle eines Radialverdichters, wodurch eine kräftige Luftströmung gewährleistet wird.

Die Kanäle 19 und 20 sind durch Herausdrücken von Material aus der ursprünglichen Blechebene nach beiden Seiten gebildet. Die ursprüngliche Form des Bleches ist im inneren Bereich 15a noch erhalten. Wie Fig. 6 zeigt, werden die unteren Kanäle 20 sowohl dadurch gebildet, daß bezüglich Fig. 6 gesehen Material von unten nach oben verdrängt wird als auch dadurch, daß Material von oben nach unten verdrängt wird. Die Verformung ist so gewählt, daß die senkrechten Kanalwände 19a und 20a in einer entsprechend den strichpunktierten Linien in Fig. 5 gekrümmten Fläche liegen. Daraus ergibt sich, daß ein Vorsprung 21 zwischen zwei Kanälen 19 und ein Vorsprung 22 zwischen zwei Kanälen 20 jeweils die gleiche Breite haben wie die Kanäle 19 und 20.

Aus den Bereichen 22 zwischen benachbarten unteren Kanälen 20 sind Fixierungsvorsprünge 23 und aus den Bereichen 21 zwischen zwei oberen Kanälen 19 Fixierungsvorsprünge 24 ausgeprägt. Den Vorsprüngen 23 und 24 entsprechen Vertiefungen 25 bzw. 26 an den Böden der Kanäle 19 und 20, die wieder das gleiche Volumen haben wie die Fixierungsvorsprünge.

Wie man aus Fig. 5 ersehen kann, sind die Fixierungsvorsprünge wieder auf drei Teilkreisen 27, 28 und 29 angeordnet. Ähnlich wie bei der bereits beschriebenen Ausführungsform befinden sich auf dem mittleren Teilkreis 28 nur Fixierungsvorsprünge, während auf dem inneren Teilkreis 27 und dem äußeren Teilkreis 29 auch Nietlöcher angeordnet sind. Fig. 5 zeigt, daß sowohl auf dem inneren Teilkreis 27 als auch auf dem äußeren Teilkreis 29 jeweils zwei Niete 18 negeneinander angeordnet sind. Zwischen zwei Nieten liegen dann auf einem dieser Teilkreise wieder nebeneinander zwei Fixierungsvorsprünge. Benachbarte Niete und benachbarte Fixierungsvorsprünge liegen auf verschiedenen Seiten.

An den Stellen, wo Niete angeordnet sind, befinden sich am Grunde von oberen Kanälen 19 bzw. unteren Kanälen 20 Ansenkungen 30, die in Durchgangslöcher 31 übergehen.

Die Reibringe 16 und 17 sind bei der Ausführungsform nach den Fig. 5 und 6 ebene Scheiben. Diese Scheiben enthalten auf Teilkreisen 27, 28 und 29 teils Fixierungslöcher 32 bzw. 33 und teils Nietlöcher 34 bzw. 35 mit jeweils einer äußeren Ansenkung und einem daran anschließenden zylindrischen Lochteil. Ferner enthalten die Reibringe 16 und 17 große Durchgangslöcher 36, deren Durchmesser so groß ist, daß ein Nietkopf hindurchgesteckt werden kann.

Die Einzelteile der Bremsscheibe werden wieder im Feinstanzverfahren hergestellt. Beim Zusammensetzen der Bremsscheibe wird zunächst der obere Reibring 17 auf den Tragkörper 15 aufgesteckt, wobei die Fixierungsvorsprünge 24 mit den Fixierungslöchern 33 in Eingriff gebracht werden. Nun werden bereits mit Köpfen 18a versehene Niete 18 von unten her durch die Tragscheibe 15 und den Reibring 17 hindurchgesteckt. Durch Bildung des oberen Nietkopfes 18b wird die Verbindung hergestellt. Die Verbindung 18b füllt die Ansenkung des Nietloches nicht vollständig aus, so daß dort ein freier Raum 35a verbleibt.

Nach vollständigem Vernieten des Reibringes 17 wird der Reibring 16 aufgesetzt, wobei die Vorsprünge 23 in die Löcher 32 eingeführt werden. Nun werden von oben her Niete eingeführt. Dies ist dank der großen Durchgangslöcher 36 möglich. In dem oberen Reibring 17 befindet sich also an jeder Nietstelle zwischen Tragkörper 15 und unterem Reibring 16 ein solches Durchgangsloch. Für die Montage genügt es, wenn in einer Reibscheibe Durchgangslöcher vorgesehen sind. Um jedoch nicht zwei verschiedene Teile verwenden zu müssen, ist es zweckmäßig, beide Reibscheiben mit Durchgangslöchern zu versehen.

An jeder Bremsfläche 16c und 17c befinden sich Vertiefungen, die längs den Teilkreisen 27, 28 und 29 angeordnet sind. Die Vertiefungen bestehen an der Fläche 16c teils aus den freigebliebenen Teilen der Nietlöcher und teils aus den freigebliebenen Teilen der Fixierungslöcher 32. Da die Fixierungsvorsprünge 23 eine Höhe haben, die kleiner ist als die Dicke der Reibringe, werden die Fixierungslöcher nicht ganz ausgefüllt. An der Reibfläche 17c werden die Vertiefungen ebenfalls teils durch freigebliebene Teile von Nietlöchern und teils von freigebliebenen Teilen der Fixierungslöcher 33 gebildet. Weitere Vertiefungen werden durch die großen Durchgangslöcher 36 gebildet. Diese Vertiefungen haben wieder den Vorteil, daß Wasserfilme rasch von den Bremsflächen 16c und 17c abgestreift werden.

Fig. 7 zeigt eine Alternative für die Ausbildung des Tragkörpers, der hier mit 15' bezeichnet ist. Es handelt sich um einen topfförmigen Tragkörper. Es gelten hierzu die gleichen Ausführungen, die schon anhand der Fig. 3 und 4 gemacht wurden. Der Bereich, in dem die in Fig. 7 nicht dargestellten Reibscheiben angebracht werden, ist gleich ausgebildet wie bei der Ausführungsform nach den Fig. 5 und 6.

Sowohl die Tragkörper als auch die Reibringe bestehen vorzugsweise aus Stahl. Dabei wird man für den Tragkörper ein gut ziehfähiges Material und für die Reibringe ein Material mit guten Bremseigenschaften verwenden. Insbesondere für die Reibringe kommen auch andere Materialien als Stahl in Betracht, z.B. Aluminium.

**Ansprüche**

1. Mehrteilige Bremsscheibe A, B, C für Scheibenbremsen, insbesondere Fahrzeugbremsen, mit einem Tragkörper (1, 14, 15, 15') der einen Verbindungsflansch bildet und mit an Seitenflächen des Tragkörpers anliegenden Reibringen (2, 3, 16, 17) aus Metall, insbesondere aus Stahl, die mit dem Tragkörper durch Niete (4, 18) verbunden sind, die den Tragkörper und mindestens einen Reibring durchgreifen, dadurch gekennzeichnet, daß der Tragkörper (1, 14, 15, 15') und die Reibringe (2, 3, 16, 17) Feinstanzteile sind, daß der Tragkörper und/oder die Reibringe zusätzliche über ihren Umfang verteilte durchgehende Fixierungslöcher (10, 32, 33) aufweisen und daß aus den Reibscheiben und/oder dem Tragkörper Fixierungsvorsprünge (11, 23, 24) durch Herausdrücken von Material von der gegenüberliegenden Seite her ausgeprägt sind, die passend in die Fixierungslöcher eingreifen und die Reibscheiben am Tragkörper zentrieren.

2. Bremsscheibe nach Anspruch 1, dadurch gekennzeichnet, daß die Höhe der am Tragkörper (15, 15') befindlichen Fixierungsvorsprünge (23, 24) geringer ist als die Länge der zugeordneten Durchgangslöcher (32, 33) in den Reibscheiben (16, 17), so daß an Außenflächen (16C, 17c) der Reibscheiben Vertiefungen verbleiben.

3. Bremsscheibe nach einem der vorhergehenden Ansprüche, dadurch gekennzeichnet, daß in den Tragkörper (15, 15') durch Herausdrücken von Material aus der allgemeinen Ebene eines Ausgangsbleches Luftkanäle (19, 20) mit rechteckigem Querschnitt eingeformt sind.

4. Bremsscheibe nach Anspruch 3, dadurch gekennzeichnet, daß benachbarte Kanäle (19, 20) an einander gegenüberliegenden Seiten des Tragkörpers (15, 15') angeordnet sind.

5. Bremsscheibe nach Anspruch 4, dadurch gekennzeichnet, daß die einander benachbarten und rechtwinklig zur allgemeinen Ebene des Tragkörpers (15, 15') stehenden Seitenwände (19a, 20a) der Kanäle in einer Fläche liegen.

6. Bremsscheibe nach einem der Ansprüche 3 bis 5, dadurch gekennzeichnet, daß die Niete (18) innerhalb der Kanäle (19, 20) angeordnet sind und jeweils nur die vom Kanal abgewendete Reibscheibe durchgreifen.

7. Bremsscheibe nach einem der Ansprüche 3 bis 6, dadurch gekennzeichnet, daß die Kanäle (19, 20) in an sich bekannter Weise bogenförmig ausgebildet sind.

8. Bremsscheibe nach einem der vorhergehenden Ansprüche, dadurch gekennzeichnet, daß der Tragkörper (1, 15) im wesentlichen als ebene Scheibe ausgebildet ist.

9. Bremsscheibe nach einem der Ansprüche 1 bis 7, dadurch gekennzeichnet, daß der Tragkörper (14, 15') topfförmig ausgebildet ist.

10. Bremsscheibe nach einem der vorhergehenden Ansprüche, dadurch gekennzeichnet, daß der Tragkörper (1, 14) im Bereich der Anlage der Reibringe (2, 3) eben ausgebildet ist und daß zur Ausrichtung der Reibringe (2, 3) im Tragkörper (1, 14) nur Fixierungslöcher (10) und an den Reibscheiben (2, 3) nur Fixierungsvorsprünge (11) angeordnet sind und in ein Fixierungsvorsprünge (11) eingreifen.

11. Bremsscheibe nach einem der Ansprüche 1 bis 9, dadurch gekennzeichnet, daß an beiden Seiten des Tragkörpers (15, 15') Fixierungsvorsprünge (24, 24) angeordnet sind, die in Fixierungslöcher (32, 33) der banachbarten Reibringe (16, 17) eingreifen.

12. Bremsscheibe nach Anspruch 11, dadurch gekennzeichnet, daß die fixierungsvorsprünge (23, 24) jeweils im Bereich (22, 21) zwischen zwei Kanälen (20, 19) angeordnet sind.

13. Bremsscheibe nach einem der vorhergehenden Ansprüche, dadurch gekennzeichnet, daß die Fixierungsvorsprünge (11, 23, 24) und/ oder die Fixierungslöcher (10, 32, 33) auch in radialer Richtung über die Reibringe (2, 3, 16, 17) verteilt sind.

## Claims

1. Multipart brake disc A, B, C for disc brakes, particularly vehicle brakes, with a support body (1, 14, 15, 15') which forms a connecting flange and with friction rings (2, 3, 16, 17), which are formed of metal, particularly of steel, rest against the side faces of the support body and are connected to the support body by rivets (4, 18) which penetrate the support body and at least one friction ring, characterised in that the support body (1, 14, 15, 15') and the friction rings (2, 3, 16, 17) are precision stamped parts, that continuous fixing holes (10, 32, 33) are additionally distributed over the circumference of the support body and/or the friction rings and that fixing projections (11, 23, 24) are stamped out of the friction discs and/or the support body by forcing material out from the opposite side, which fixing projections (11, 23, 24) appropriately engage in the fixing holes and centre the friction discs on the support body.

2. Brake disc according to claim 1, characterised in that the height of the fixing projections (23, 24) disposed on the support body (15, 15') is not as great as the length of the associated continuous holes (32, 33) in the friction discs (16, 17), so that recesses remain on external surfaces (16c, 17c) of the friction discs.

3. Brake disc according to one of the preceding claims, characterised in that air ducts (19, 20) of a rectangular cross-section are formed in the support body (15, 15') as a result of material being forced out of the general plane of an initial sheet.

4. Brake disc according to claim 3, characterised in that adjacent ducts (19, 20) are arranged on opposite sides of the support body (15, 15').

5. Brake disc according to claim 4, characterised in that the duct side walls (19a, 20a) which are adjacent to one antoher and disposed at right angles to the general plane of the support body (15, 15') lie in one plane.

6. Brake disc according to one of claims 3 to 5, characterised in that the rivets (18) are arranged inside the ducts (19, 20) and in each case only penetrate the friction disc distant from the duct.

7. Brake disc according to one of claims 3 to 6, characterised in that the ducts (19, 20) are curved in a manner which is known *per se*.

8. Brake disc according to one of the preceding claims, characterised in that the support body (1, 15) is essentially formed as a plane disc.

9. Brake disc according ot one of claims 1 to 7, characterised in that the support body (14, 15') is cup-shaped.

10. Brake disc according to one of the preceding claims, characterised in that the support body (1, 14) is plane in the region in which it abuts the friction rings (2, 3) and that, in order to align the friction rings (2, 3), only fixing holes (10 are disposed in the support body (1, 14) and only fixing projections (11) are arranged on the friction discs (2, 3) and fixing projections (11) engage from both sides in a fixing hole (10).

11. Brake disc according to one of claims 1 to 9, characterised in that fixing projections (23, 24) are arranged on both sides of the support body (15, 15') and engage in fixing holes (32, 33) of the adjacent friction rings (16, 17).

12. Brake disc according to claim 11, characterised in that the fixing projections (23, 24) are in each case arranged in the region (22, 21) between two ducts (20, 19)

13. Brake disc according to one of the precedings claims, characterised in that the fixing projections (11, 23, 34) and/or the fixing holes (10, 32, 33) are also distributed in a radial direction over the friction rings (2, 3, 16, 17).

## Revendications

1. Disque de freins (A, B, C) en plusieurs parties pour freins à disque, en particulier pour véhicules, comprenant un corps porteur (1, 14, 15, 15') qui constitue une bride de jonction et des anneaux à friction (2, 3, 16, 17) en métal, en particulier en acier, qui sont appliqués contre les surfaces latérales du corps porteur et sont reliés à celui-ci par des rivets (4, 18) traversant le corps porteur et au moins un anneau à friction, caractérisé en ce que le corps porteur (1, 14, 15, 15') et les anneaux à friction (2, 3, 16, 17) sont des pièces matricées avec précision, en ce que le corps porteur et/ou les anneaux à friction comportent des trous de traversée supplémentaires (10, 32, 33) pour fixation, répartis à leur périphérie et en ce que des saillies de fixation (11, 23, 24) sont matricées dans les disques à friction et/ou le corps porteur, par repoussage du matériau à partir du côté opposé, lesdites saillies s'engageant avec adaptation dans les trous de fixation et centrant les disques à friction sur le corps porteur.

2. Disque de frein selon la revendication 1, caractérisé en ce que la hauteur des saillies de fixation (23, 24) existant sur le corps porteur (15, 15') est inférieure à la longueur des trous de traversée correspondants (32, 33) dans les disques à friction (16, 17), de sorte que des renforcements subsistent sur les surfaces extérieures (16c, 17c) des disques à friction.

3. Disque de frein selon l'une des revendications précédentes, caractérisé en ce que des canaux d'air (19, 20) à section transversale rectangulaire sont obtenus au formage du corps porteur (15, 15') par repoussage du matériau d'un flan de départ hors du plan général.

4. Disque de frein selon la revendication 3, caractérisé en ce que des canaux voisins (19, 20) sont disposés sur les côtés en regard du corps porteur (15, 15').

5. Disque de frein selon la revendication 4, caractérisé en ce que les parois latérales (19a, 20a) des canaux lesquelles sont voisines l'une de l'autre et perpendiculaires au plan général du corps porteur (15, 15'), sont situées dans une même surface.

6. Disque de frein selon l'une des revendications 3 à 5, caractérisé en ce que les rivets (18) sont disposés à l'intérieur des canaux (19, 20) et ne traversent chacun que le disque à friction éloigné du canal.

7. Disque de frein selon l'une des revendications 3 à 6, caractérisé en ce que les canaux (19, 20) sont établis de façon connue avec une forme arquée.

8. Disque de frein selon l'une des revendications précédentes, caractérisé en ce que le corps porteur (1, 15) a sensiblement la forme d'un disque plan.

9. Disque de frein selon l'une des revendications 1 à 7, caractérisé en ce que le corps porteur (14, 15') est établi avec une forme en cuvette.

10. Disque de frein selon l'une des revendications précédentes, caractérisé en ce que le corps porteur (1, 14) a une forme plane dans la région de contact des anneaux à friction (2, 3) et en ce que pour l'alignement des anneaux à friction (2, 3) des trous de fixation (10) sont disposés seulement dans le corps porteur (1, 14) et des saillies de fixation (11), seulement sur les disques à friction (2, 3), les saillies de fixation (11) s'engageant dans un trou de fixation (10) à partir des deux côtés.

11. Disque de frein selon l'une des revendications 1 à 9, caractérisé en ce que des saillies de fixation (23, 24) sont disposées sur les deux côtés du corps porteur (15, 15'), ces saillies s'engageant dans des trous de fixation (32, 33) des anneaux à friction (16, 17) voisins.

12. Disque de frein selon la revendication 11, caractérisé en ce que les saillies de fixation (23, 24) sont chacune disposées dans la région (22, 21) comprise entre deux canaux (20, 19).

13. Disque de frein selon l'une des revendications précédentes, caractérisé en ce que les saillies de fixation (11, 23, 24) et/ou les trous de fixation (10, 32, 33) sont également répartis dans le sens radial sur les anneaux à friction (2, 3, 16, 17).

**0 015 993**

*Figur 1*

A

II          II

7

8

13

9

12

6      1      13   3   12

3a

*Figur 2*     13b 4c   13a

10                    4

10

10

11

2a

4b  10  4a           5           2

Figur 3

B

IV                                                                    IV

6'

Figur 4

14a   14b   5'          6'    14

14c

14d

# 0 015 993

*Figur 5*

C

VI

VI

27

28

29

18

18

15'

*Figur 7*

*Figur 6*

17b
35a 18b 17c 19 19a
35f 17 33 21 17a
15d 15
19 25 21
24
36
30
19

18
18a
16b
20 16 22 20a 20 16c 16a
5" 6"
22 32 23 26 34 31

3